# EUROPÄISCHE PATENTSCHRIFT

(11) **EP 1 205 408 B1**
(45) Veröffentlichungstag und Bekanntmachung des Hinweises auf die Patenterteilung: **26.11.2003**
(21) Anmeldenummer: 01123533.0
(22) Anmeldetag: 29.09.2001
(51) Int. Cl.: B65G 15/58, B65G 21/20

(54) **Förderband für einen Saugbandförderer**
Transport band for suction conveyor
Bande de transport pour convoyeur à suction

(30) Priorität: 13.11.2000 DE 10056097
(43) Veröffentlichungstag der Anmeldung: 15.05.2002
(73) Patentinhaber: Sundwig GmbH, 58675 Hemer (DE)
(72) Erfinder: Giessler, Jürgen, 77933 Lahr (DE)
(74) Vertreter: Kaiser, Magnus, Dipl.-Phys.

(56) Entgegenhaltungen:
- DE-A- 1 929 183
- DE-A- 19 636 161

## Beschreibung

Die Erfindung betrifft ein Förderband für einen Saugbandförderer nach dem Oberbegriff des Patentanspruchs 1.

Ein Saugbandförderer ist eine Fördervorrichtung, bei der ein Förderband um einen Förderbandkörper umläuft, wobei das Förderband mit Ansaugöffnungen versehen ist, die mit im Förderbandkörper angeordneten Vakuumeinrichtungen zusammenwirken und das Fördergut mittels Unterdruck festhalten.

Ein typisches Einsatzgebiet für einen Saugbandförderer ist die blechverarbeitende Industrie, in der Bleche oft hängend von einer Verarbeitungsstation zur nächsten transportiert werden müssen. Während für ferromagnetische Werkstoffe Magnetbandförderer eingesetzt werden, bei denen im Förderbandkörper eine Anzahl von Magneten angeordnet ist, deren Magnetfelder das Förderband durchdringen und bei den zu transportierenden Werkstücken für die Kompensation der Erdanziehung sowie für eine Anpresskraft zwischen dem Werkstück und dem Förderband sorgen, werden für nichtmagnetische Materialien üblicherweise Saugbandförderer der eingangs genannten Art verwendet.

Für einen solchen Saugbandförderer sind verschiedene Arten von speziellen Förderbändern bekannt geworden: So zeigt z. B. die DE 196 14 742 A1 ein Förderband mit einer Anzahl von mittig angebrachten Ansaugöffnungen, die mit einem Vakuumkanal im Förderbandkörper in Wirkverbindung stehen. Transportseitig sind die Ansaugöffnungen von ringförmigen Erhebungen umgeben, die vom Transportgut abgedeckt werden und hierdurch Saugtaschen bilden.

Eine andere Art eines Förderbands für einen Saugbandförderer ist beispielsweise in der DE 198 02 943 A1 beschrieben: Das dort offenbarte Förderband ist ebenso mit Ansaugöffnungen versehen, die mit einem Vakuumkanal im Förderbandkörper korrespondieren; die Saugtaschen werden hier jedoch durch auf die Ansaugöffnungen gesetzte Saugnäpfe aus nachgiebigem Material gebildet.

Bei diesen beiden bekannten Arten eines Förderbands besteht die Gefahr, dass die Saugtaschen durch scharfe Kanten der zu transportierenden und oftmals frisch geschnittenen oder gestanzten Bleche zerschnitten oder auf sonstige Weise beschädigt und dadurch undicht werden.

Ein weiterer Vorschlag für ein Förderband eines Saugbandförderers ist in der DE 196 36 161 A1 zu finden: Das dort beschriebene Förderband besteht aus einem Trägerriemen und einer transportseitig darauf aufgebrachten Dichtschicht aus weichelastischem Material. Diese Dichtschicht ist mit einer Vielzahl von hintereinander angeordneten Unterdruckvertiefungen versehen, die bei geringem Volumen eine große Ansaugfläche bieten und dementsprechend die Saugtaschen zum Festhalten des Transportgutes bilden.

Problematisch ist hierbei, wie auch bei den anderen beiden bekannten Förderbandarten, die weiche Oberfläche, die in Kontakt mit dem Fördergut tritt und die Abdichtung der Saugtasche gegenüber der Umgebungsluft sicherstellen soll: Neben der oben beschriebenen Gefahr von Beschädigungen durch scharfe Blechkanten ist eine solche weiche Dichtschicht auch einem hohen Verschleiß durch die abrasiven Eigenschaften des Transportguts ausgesetzt. Des weiteren ergibt sich speziell bei dem letztgenannten bekannten Förderband das Problem, dass die Auflagefläche, die beim Transport mit dem Transportgut in Kontakt kommt, sehr groß ist, was die Abdichtung der Saugtasche vor allem dann deutlich erschwert, wenn nicht völlig plane Werkstücke transportiert werden sollen. Aber auch bei ebenen Oberflächen kann sich schon dadurch eine Undichtigkeit ergeben, wenn irgendwo auf der vergleichsweise großen Auflagefläche ein hinreichend großer Schmutzpartikel vorhanden ist. Ferner ist man bestrebt, beim Transport von Blechen, deren Oberflächen nicht zerkratzt werden dürfen, die Auflagefläche der Bleche und damit die Kratzgefahr aufgrund von Schmutzpartikeln möglichst klein zu halten.

Schließlich ist in der DE-A-1 929 183 ein Förderband eines Saugbandförderers der eingangs genannten Art beschrieben. Dieses Förderband umfasst einen Trägerriemen, eine folienartige Deckschicht, die den Trägerriemen transportseitig ganzflächig überdeckt, sowie eine Zwischenlage zur Bildung von Vakuumkammern. Durch Evakuieren der Vakuumkammern innerhalb des Förderbandes wird die membranartige Deckschicht in die Vakuumkammern eingezogen, wodurch sich Saugtaschen bilden. Es liegt auf der Hand, dass die Herstellung eines solchen speziell ausgebildeten Förderbandes recht aufwendig ist.

Der Erfindung liegt die Aufgabe zugrunde, ein Förderband für einen Saugbandförderer bereitzustellen, das einen sicheren Betrieb, insbesondere eines Saugbandförderers für den hängenden Transport, mit einer hohen Robustheit, einer geringen Ausfallquote und einem einfachen Aufbau kombiniert.

Diese Aufgabe ist durch ein Förderband mit den Merkmalen des beigefügten Patentanspruchs 1 gelöst.

Vorteilhafte Ausgestaltungen und Weiterbildungen der Erfindung ergeben sich aus den Patentansprüchen 2 bis 7.

Ein Förderband nach der Erfindung besteht also im Wesentlichen aus einem Trägerriemen und einer abriebfesten Deckschicht, die den Trägerriemen transportseitig ganzflächig überdeckt, wobei eine Anzahl von Saugöffnungen, die mit einer Unterdruckvorrichtung verbunden werden können, das Förderband durchsetzt, sowie aus einem zwischen dem Trägerriemen und der Deckschicht angeordneten, weichelastischen Material, das die Saugöffnungen jeweils flächig oder in geschlossenen geometrischen Formen umgibt, wobei das weichelastische Material als ganzflächige Zwischenschicht zwischen dem Trägerriemen und der Deckschicht angeordnet ist, und wobei die Deckschicht und der Trägerriemen jeweils an den Saugöffnungen so miteinander verbunden sind, dass sich dort trichterartige Saugtaschen ausbilden.

Das erfindungsgemäße Förderband ist also sandwichartig aufgebaut, wobei das weichelastische Material vorteilhafterweise nicht mit dem Transportgut in Berührung kommt. Vielmehr wird der Kontakt zwischen dem Transportgut und dem Förderband alleine von der abriebfesten Deckschicht hergestellt, die dünn und widerstandsfähig, insbesondere nach Art einer Folie, ausgestaltet ist und die nachgiebigen Eigenschaften des darunter liegenden weichelastischen Materials an das Fördergut weitergibt, dieses jedoch gleichzeitig vor Abrieb und scharfen Kanten schützt. Die schützende Deckschicht erhöht die Widerstandsfähigkeit und Betriebssicherheit des Förderbands daher insgesamt ganz erheblich. Das weichelastische Material ist dabei als ganzflächige Zwischenschicht zwischen den Trägerriemen und die Deckschicht eingebracht.

Die Verwirklichung des erfindungsgemäßen Prinzips ergibt ein Förderband, das vorteilhaft einfach hergestellt werden kann: Es ist vorgesehen, das weichelastische Material als ganzflächige Zwischenschicht zwischen den Trägerriemen und die Deckschicht einzubringen. Zur Bildung der notwendigen Saugtaschen können dann die Deckschicht und der Trägerriemen jeweils an den Saugöffnungen so miteinander verbunden werden, dass sich dort vorzugsweise durch eine Kompression des weichelastischen Materials von selbst trichterartige Saugtaschen ausbilden. Es ergibt sich also ein Effekt, den man von Polsterungen kennt. Es liegt auf der Hand, dass nicht nur die Herstellung eines solchen Förderbandes besonders einfach und unkompliziert ist, sondern dass es besonders robuste und widerstandsfähige Eigenschaften aufweist.

Die Befestigung der Deckschicht am Trägerriemen wird besonders bevorzugt entweder mit durch die Saugöffnungen gesteckte Gewindehülsen, die mittels eines Schraubenkopfs und einer Mutter bzw. mittels zweier Muttern eine Schraubenverbindung herstellen, oder mit in die Saugöffnungen eingesteckten Hohlnieten zur Bildung von Nietverbindungen zwischen dem Trägerriemen und der Deckschicht vorgenommen. Sowohl die Gewindehülse als auch der Hohlniet bilden jeweils gleichzeitig die Durchführung durch die Saugöffnungen des Förderbands und können beispielsweise als drosselndes Düsenelement ausgebildet sein, um den Eintritt von Falschluft in das Vakuumsystem bei etwa unbelegten Saugöffnungen zu begrenzen.

Sowohl die Schraubenverbindung als auch die Nietverbindung ermöglichen einen wohldefinierten Abstand zwischen der Deckschicht und dem Trägerriemen an den Saugöffnungen.

Das weichelastische Material besteht vorzugsweise aus einem moosgummiartig kompressiblen Werkstoff. Ebenso vorteilhaft kann es jedoch sein, wenn das weichelastische Material aus einem Gel oder einem gelartigen Werkstoff besteht.

Ein Ausführungsbeispiel der Erfindung wird im Folgenden anhand der beigefügten Zeichnung näher beschrieben und erläutert.

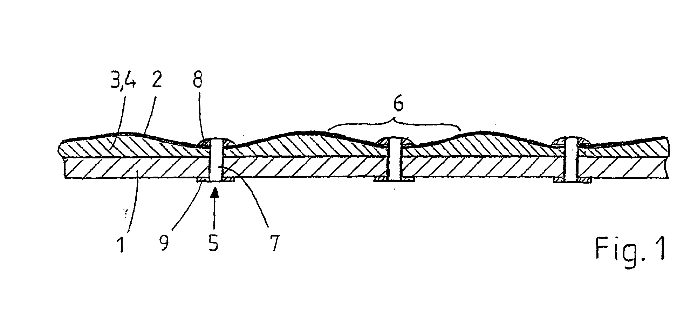

Figur 1 zeigt die geschnittene Seitenansicht eines erfindungsgemäßen Förderbands, das sandwichartig aus einem Trägerriemen 1, der beispielsweise ein Poly-urethangurt mit Textileinlagen oder eingelegten Stahllitzen ist, einer abriebfesten Deckschicht 2, beispielsweise bestehend aus einer PVC-Folie, und einer ganzflächig zwischen den Trägerriemen 1 und der Deckschicht 2 gelegten Zwischenschicht 3 aus weichelastischem Material 4, beispielsweise aus Moosgummi oder einem Gel, aufgebaut ist. Das Förderband weist eine Anzahl von in Förderrichtung hintereinander angeordneten Saugöffnungen 5 auf, die über einen (nicht dargestellten) Vakuumkanal eines in dieser Darstellung unterhalb des Trägerriemens 1 anzuordnenden (ebenfalls nicht dargestellten) Förderbandkörpers mit einer (wiederum nicht dargestellten) Vakuumvorrichtung verbunden werden können.

Die zum Festhalten des Transportguts notwendigen Saugtaschen 6 werden in einfachster Weise dadurch hergestellt, dass in die Saugöffnungen 5 jeweils ein Hohlniet 7 gesteckt wird, dessen Nietköpfe 8, 9 die Deckschicht 2 und den Trägerriemen 1 derart miteinander verbinden, dass das weichelastische Material 4 in der Umgebung der Saugöffnungen 5 zusammengedrückt wird. Die elastischen Eigenschaften des weichelastischen Materials 4 gewährleisten dabei, dass sich eine geeignete Saugtasche 6 selbsttätig ausbildet. Der Hohlniet 7 und sein oberer und unterer Nietkopf 8 bzw. 9 können aus Stahl bestehen; es ist jedoch auch möglich, jeweils ein Einsetzteil aus Kunststoff zu verwenden, insbesondere, wenn keine Nietverbindung, sondern eine Schraubenverbindung der Deckschicht 2 und des Trägerriemens 1 hergestellt werden soll.

Wie anhand des Ausführungsbeispiels deutlich wird, ist ein nach der Erfindung ausgebildetes Förderband nicht nur deutlich robuster als die bisher bekannten Förderbänder für Saugbandförderer, sondern es kann darüber hinaus auch noch sehr viel einfacher hergestellt werden.

## Patentansprüche

1. Förderband für einen Saugbandförderer, im wesentlichen bestehend aus einem Trägerriemen (1), einer abriebfesten Deckschicht (2), die den Trägerriemen (1) transportseitig ganzflächig überdeckt, einer Anzahl von den Trägerriemen (1) und die Deckschicht (2) durchsetzenden Saugöffnungen (5), die mit einer Unterdruckvorrichtung verbindbar sind, sowie einem zwischen dem Trägerriemen (1) und der Deckschicht (2) angeordneten, weichelastischen Material (4), das die Saugöffnungen (5) jeweils umgibt,
**dadurch gekennzeichnet,**
**dass** das weichelastische Material (4) als ganzflächige Zwischenschicht (3) zwischen dem Trägerriemen (1) und der Deckschicht (2) angeordnet ist, wobei die Deckschicht (2) und der Trägerriemen (1) jeweils an den Saugöffnungen (5) so miteinander verbunden sind, dass sich dort trichterartige Saugtaschen (6) ausbilden.

2. Förderband nach Anspruch 1,
**dadurch gekennzeichnet,**
**dass** die Deckschicht (2) und der Trägerriemen (1) so miteinander verbunden sind, dass sich die trichterartigen Saugtaschen (6) durch Kompression des weichelastischen Materials (4) ausbilden.

3. Förderband nach einem der Ansprüche 1 oder 2,
**dadurch gekennzeichnet,**
**dass** die Saugöffnungen (5) jeweils mit einer Gewindehülse versehen sind, welche mittels eines Schraubenkopfs und einer Mutter bzw. mittels zweier Muttern eine Schraubenverbindung zwischen dem Trägerriemen (1) und der Deckschicht (2) bildet.

4. Förderband nach einem der Ansprüche 1 oder 2,
**dadurch gekennzeichnet,**
**dass** die Saugöffnungen (5) jeweils mit einem Hohlniet (7) zur Bildung einer Nietverbindung zwischen dem Trägerriemen (1) und der Deckschicht (2) versehen sind.

5. Förderband nach einem der Ansprüche 3 oder 4,
**dadurch gekennzeichnet,**
**dass** die Gewindehülse oder der Hohlniet (7) als Düsenelement ausgebildet sind.

6. Förderband nach einem der Ansprüche 1 bis 5,
**dadurch gekennzeichnet,**
**dass** das weichelastische Material (4) aus einem moosgummiartig kompressiblen Werkstoff besteht.

7. Förderband nach einem der Ansprüche 1 bis 5,
**dadurch gekennzeichnet,**
**dass** das weichelastische Material (4) aus einem Gel oder einem gelartigen Werkstoff besteht.

## Claims

1. Conveyor belt for a suction belt conveyor, essentially consisting of a supporting belt (1), an abrasion-resistant covering layer (2) which covers the whole surface of the supporting belt (1) on the transport side, a plurality of suction openings (5) which pass through the supporting belt (1) and the covering layer (2) and can be connected to a vacuum device, as well as a gently resilient material (4) which is disposed between the supporting belt (1) and the covering layer (2) and surrounds each of the suction openings (5), **characterised in that** the gently resilient material (4) is disposed as an intermediate layer (3) over the whole surface between the supporting belt (1) and the covering layer (2), the covering layer (2) and the supporting belt (1) being connected to one another at each of the suction openings (5) so that funnel-like suction pockets (6) are formed there.

2. Conveyor belt as claimed in Claim 1, **characterised in that** the covering layer (2) and the supporting belt (1) are connected to one another so that the funnel-like suction pockets (6) are formed by compression of the gently resilient material (4).

3. Conveyor belt as claimed in one of Claims 1 or 2, **characterised in that** the suction openings (5) are each provided with a threaded bush which, by means of a screw head and a nut or by means of two nuts, forms a screw connection between the supporting belt (1) and the covering layer (2).

4. Conveyor belt as claimed in one of Claims 1 or 2, **characterised in that** the suction openings (5) are each provided with a hollow rivet (7) to form a rivet connection between the supporting belt (1) and the covering layer (2).

5. Conveyor belt as claimed in one of Claims 3 or 4, **characterised in that** the threaded bush or the hollow rivet (7) is formed as a nozzle element.

6. Conveyor belt as claimed in one of Claims 1 to 5, **characterised in that** the gently resilient material (4) consists of a material which is compressible like foam rubber.

7. Conveyor belt as claimed in one of Claims 1 to 5, **characterised in that** the gently resilient material (4) consists of a gel or a gel-like material.

## Revendications

1. Bande de transport pour convoyeur à succion, essentiellement constituée d'une courroie porteuse (1), d'une couche de protection résistante à l'usure (2) qui recouvre la courroie porteuse (1) sur toute sa surface du côté du transport, d'une pluralité d'ouvertures de succion (5) traversant la courroie porteuse (1) et la couche de protection (2), qui peuvent être reliées à un dispositif de dépression, ainsi que d'un matériau souple (4) agencé entre la courroie porteuse (1) et la couche de protection (2), qui entoure chacune des ouvertures de succion (5),
**caractérisée en ce que** le matériau souple (4) est agencé comme couche intermédiaire (3) sur toute la surface entre la courroie porteuse (1) et la couche de protection (2), la couche de protection (2) et la courroie porteuse (1) étant reliées l'une à l'autre à chacune des ouvertures de succion (5) de telle sorte que des poches de succion (6) semblables à des entonnoirs se forment à cet endroit.

2. Bande de transport selon la revendication 1, **caractérisée en ce que** la couche de protection (2) et la courroie porteuse (1) sont reliées l'une à l'autre de telle sorte que les poches de succion (6) semblables à des entonnoirs se forment du fait de la compression du matériau souple (4).

3. Bande de transport selon l'une quelconque des revendications 1 ou 2, **caractérisée en ce que** chacune des ouvertures de succion (5) est munie d'une douille filetée, laquelle forme un raccord vissé entre la courroie porteuse (1) et la couche de protection (2) au moyen d'une tête de vis et d'un écrou ou au moyen de deux écrous.

4. Bande de transport selon l'une quelconque des revendications 1 ou 2, **caractérisée en ce que** chacune des ouvertures de succion (5) est munie d'un rivet tubulaire (7) pour former un raccord riveté entre la courroie porteuse (1) et la couche de protection (2).

5. Bande de transport selon l'une quelconque des revendications 3 ou 4, **caractérisée en ce que** la douille filetée ou le rivet tubulaire (7) est réalisée comme élément d'extrusion.

6. Bande de transport selon l'une quelconque des revendications 1 à 5, **caractérisée en ce que** le matériau souple (4) est constitué d'une matière compressible semblable à du caoutchouc spongieux.

7. Bande de transport selon l'une quelconque des revendications 1 à 5, **caractérisée en ce que** le matériau souple (4) est constitué d'un gel ou d'une matière semblable à du gel.
